# EUROPÄISCHE PATENTSCHRIFT

(11) **EP 1 969 923 B1**
(45) Veröffentlichungstag und Bekanntmachung des Hinweises auf die Patenterteilung: **19.08.2009**
(21) Anmeldenummer: 08003007.5
(22) Anmeldetag: 19.02.2008
(51) Int. Cl.: A01J 25/10

(54) **Anordnung und Verfahren zur Abfuhr von Molke aus einem Bruch-Molke-Gemisch über dem sich absetzenden Bruch**
Device and method for extracting whey from a curd-whey-mixture through the separated curd
Système et procédé d'évacuation de petit-lait d'un mélange de lait caillé/petit-lait sur lequel est déposé le lait caillé

(30) Priorität: 16.03.2007 DE 102007012742
(43) Veröffentlichungstag der Anmeldung: 17.09.2008
(73) Patentinhaber: GEA TDS GmbH, 31157 Sarstedt (DE)
(72) Erfinder: Löw, Joachim, 31141 Hildesheim (DE)
(74) Vertreter: Mönkemeyer, Philipp

(56) Entgegenhaltungen:
- CH-A- 423 341
- DE-A1- 3 320 352
- GB-A- 1 403 627
- US-A- 3 892 172
- US-B1- 6 482 460

## Beschreibung

### TECHNISCHES GEBIET

Die Erfindung betrifft eine Anordnung zur Abfuhr von Molke aus einem Bruch-Molke-Gemisch über dem sich absetzenden Bruch nach dem nebengeordneten Anspruch 1, 2 oder 3, bei der unter anderem jeweils die Molke bezüglich des Molke-Niveaus bei einem Füllstand in einem Behälter, insbesondere einem Käsefertiger, zur Aufnahme des Bruch-Molke-Gemischs von oben her derart abgesaugt ist, dass die Absaugung zu Beginn es Absaugvorganges bei hohem Füllstand mit einem maximalen Volumenstrom beginnt und im Verlauf des Absaugvorganges bei absinkendem Füllstand mit gegenüber dem anfänglichen Volumenstrom vermindertem Volumenstrom gesteuert ist sowie ein mit der jeweiligen Anordnung durchführbares Verfahren nach Anspruch 5.

### STAND DER TECHNIK

In molkereitechnischen Prozessen, insbesondere bei der Käseherstellung, wird Milch bzw. Käsereimilch durch Laben oder Einlaben "dickgelegt". Die dickgelegte Milch, auch als süß geronnene Milch, Gallerte oder Dickete bezeichnet, steht nun für die Weiterverarbeitung, die sich insbesondere auf die Bruchbereitung bezieht, zur Verfügung. Die Bruchbereitung umfasst unter anderem die Zerkleinerung der Gallerte unmittelbar im Anschluss an die Dicklegung. Aus den Bruchstücken oder Körnern der geschnittenen Gallerte tritt bei dem nun folgenden Schrumpfungsprozess (Synärese) Molke aus. Dabei sollen sich die Körner möglichst langsam zusammenziehen, um den Fettaustritt gering zu halten. Es folgen noch weitere Schritte der Bruchbearbeitung, die abhängig von dem angestrebten Endprodukt sind.

Bei der Käseherstellung erfolgt die vorg. Herstellung der Gallerte und die anschließende Bruchbereitung und -bearbeitung in einem sog. Käsefertiger. Hierbei handelt es sich in der Regel um doppelwandige, beheizbare Käsefertigerwannen.

Die Form der zum Teil abdeckbaren Behälter ist im allgemeinen oval (länglich mit halbrunden Endteilen) bis rund, wobei bei den runden Formen, bezogen auf die Behälterlängsachse, senkrechte, geneigte und waagerechte Anordnungen bekannt sind. Die runden Formen umfassen insbesondere auch stehende zylindrische Käsekessel, wobei deren Mittelachse auch gegen die Senkrechte geneigt sein kann. Ein derartiger Käsefertiger ist aus der EP 0 155 679 A2 bekannt. Er besitzt ein kombiniertes Schneid- und Rührwerk, das alle Stellen des Inhalts erfasst. Die Mittelachse des Käsekessels ist derart gegenüber der Senkrechten geneigt, dass sich der Schwerpunkt der Füllung unterhalb der Mittelachse des Kessels befindet, und dass lediglich um die Mittelachse des Kessels zentrisch umlaufende Schneid- und Rührwerkzeuge vorgesehen sind.

Bei runden Formen in senkrechter Anordnung ist auch eine Doppelanordnung bekannt, bei der die beiden Längsachsen im Abstand voneinander angeordnet sind und die zylindrischen Mantelteile einander derart durchdringen, dass, in der Draufsicht gesehen, näherungsweise die Form einer Acht entsteht. Die letztgenannte Form ermöglicht eine Überlappung der Arbeitsbereiche der gegenläufig arbeitenden Schneid- und Rührflügel, so dass auch deren Achsbereiche erfasst werden. Generell werden die Schneid- und Rührwerkzeuge für Längs- und Querschnitte über Planetengetriebe angetrieben. Die maximalen Volumina der Käsefertiger betragen bis zu 20 m³.

Nach der Käsebruchbearbeitung wird ein Teil der Molke, die sich über dem absetzenden Käsebruch bildet, durch eine Absaugeinrichtung von oben her abgesaugt. Diese Maßnahme ist vor dem Abfüllen des Käsebruches vor allem deswegen notwendig, um ein homogenes Formgut mit geringem freien Molkeanteil zu erhalten. Zur vollständigen Entleerung der Fertigerbehälter werden diese teilweise hydraulisch über eine Schwenkvorrichtung angehoben, sofern die Behälter in Form senkrecht angeordneter zylindrischer Mantelteile nicht kegelförmige Böden besitzen und dadurch selbstentleerend arbeiten.

Da das durch das Schneiden entstehende Käsebruchkorn sehr empfindlich ist gegen mechanische und strömungsmechanische Beanspruchung, muss das Absaugen der Molke möglichst schonend erfolgen, ohne dass es zu Störungen beim Absaugen durch Verstopfung der Absaugeinrichtung mit Käsebruch oder Käsebruchverlusten kommt.

Es ist bekannt, Absaugeinrichtungen, insbesondere Absaugrohre mit siebförmig ausgebildeten Einlässen, fest im Käsefertiger zu installieren oder derart beweglich im Käsefertiger anzuordnen, dass sie zum Absaugen in die erforderliche Position im Käsebruch/Molke-Gemisch verbracht werden können. Die letztgenannte Lösung beschreibt die US 3,892,172 A**,** die unter anderem einen Siebbehälter zur Abfuhr von Molke aus einem Behälter umfasst, in dem sich ein Bruch-Molke-Gemisch befindet, wobei der Siebkörper mit Schwimmkörpern versehen ist und mit dem durch Abfuhr der Molke absinkenden Molkespiegel bis auf den entmolkten Bruch in den Behälter hinein gesteuert abgesenkt wird.

Dabei haben feststehende Anordnungen den Nachteil, dass sie einerseits den Schneid- und Rührvorgang der Labgallerte behindern können und andererseits verstopfungsanfällig sind, wenn zur Verringerung der mit der abgeführten Molke auftretenden Käsebruchverluste die siebförmig ausgebildeten Einlässe mit relativ eng bemessenen Durchtrittsquerschnitten ausgebildet werden.

Um dem Mitreißen von Bruchkörnern, insbesondere bei Annäherung des Molkespiegels an den abgesetzten Bruch, entgegenzuwirken, wurde in der DE 1 020 855 B bereits vorgeschlagen, im oberen Ablaufwannenteil der Ablaufwanne, in der sich das Bruch-Molke-Gemisch befindet, Löcher in mehreren Lochreihen anzuordnen, wobei die Löcher der oberen Lochreihe größer sind als die der darunterliegenden Reihe.

Falls die bekannten Absaugeinrichtungen derart angeordnet sind, dass sie in den Arbeitsbereich der Schneid- und Rührflügel eingreifen, müssen letztere während des Absaugvorganges stillgesetzt werden. Durch diese Unterbrechung wird der Behandlungsprozess des Käsebruch/Molke-Gemisches verlängert, da dann eine zeitgleiche Bearbeitung des Käsebruch/Molke-Gemisches mit den Schneid- und Rührflügeln und eine Absaugung der Molke nicht möglich ist.

In vielen Fällen werden Molkensiebe eingesetzt, die waagerecht angeordnet sind und auf dem höhenveränderlichen Molke-Niveau durch geeignete Steuereinrichtungen mitgeführt werden. Eine diesbezügliche Mokeabsaugeinrichtung ist aus der vorstehend erwähnten EP 0 155 679 A2 bekannt. Diese Molkeabsaugeinrichtung kann nur bei stillgesetztem Schneid- und Rührwerk aktiv werden, und sie umfasst einen an einer Führungsstange parallel zum Flüssigkeitsspiegel führbaren Siebkorb, der an eine Saugleitung angeschlossen ist. Der Siebkorb ist vorzugsweise sehr flach gehalten, nur seitlich perforiert und wird über eine geeignete Niveausteuerung so abgesenkt, dass er stets nahezu bis zur Oberkante in die Molke eingetaucht ist.

Unabhängig von der jeweiligen Form der Absaugeinrichtungen besteht aber immer die Gefahr, dass die Sieböffnungen durch mitgerissenen Käsebruch oder Käsebruchverluste verstopft werden und dadurch die Standzeit der Absaugeinrichtungen beeinträchtigt wird. Nach unten hin abnehmende Durchmesser der die Sieböffnungen bildenden Löcher, wie in der DE 1 020 855 B vorgesehen, können diese Gefahr nicht eliminieren.

Um die vorg. Verstopfungsgefahr zu vermindern oder ihr entgegen zu wirken, wurde bereits vorgeschlagen, dass die die Sieböffnungen tragenden Bauteile beim Absaugvorgang eine Rotations- oder Schwenkbewegung gegenüber dem stationären Behälter ausführen. Derartige Ausführungsformen sind konstruktiv aufwendig und daher kostenintensiv, und sie sind selbst durch ihre komplexe Funktionalität verschleiß- und störungsanfällig.

In der DE 864 013 C ist eine derartige Vorrichtung zur Molkeableitung in Käsewannen mit mechanischer Bruchbereitung beschrieben, wobei die in die Käsewanne reichenden Bearbeitungswerkzeuge an einem über der Käsewanne hin und her gehenden Laufwagen befestigt sind und der Laufwagen als Träger eines in die Käsewanne reichenden Siebbehälters mit Abflussleitung für die überschüssige Molke dient. Dieser Siebbehälter beschreibt somit ebenfalls eine hin und her gehende Bewegung, so dass die überschüssige Molke ohne Unterbrechung der Bruchbearbeitung abgeführt werden kann.

Aus der FR 21 46 532 A5 ist eine Vorrichtung zum Absaugen von Molke aus einem Käsefertiger bekannt, die in diesem insgesamt ortsfest positioniert wird und deren Siebkörper eine Rotationsbewegung ausführt, so dass die Sieböffnungen immer wieder von sich dort festsetzenden Käsebruchbestandteilen freigelegt werden.

In der DE 21 25 134 A1 ist eine andere, ebenfalls im Käsefertiger fest positionierte Vorrichtung zum Absaugen von Molke beschrieben, bei der ein Siebmantel mittels eines Antriebs in eine Relativbewegung zum umgebenden Käsebruch/Molke-Gemisch im Behälterinnenraum des Käsefertigers versetzbar ist. Dabei kann die Relativbewegung des Siebmantels in einer alternierden Schwenkbewegung um dessen Hauptachse oder in einer Volldrehung mit beispielsweise stufenlos veränderbarer Umdrehungsgeschwindigkeit bestehen.

In der DE 878 577 C ist eine Molken-Ablassvorrichtung für einen Käsekessel beschrieben, die in einer Einbuchtung der Kesselwand angeordnet ist und ein in einer senkrechten Führung gelagertes, auf und ab bewegbares Ablaufrohr aufweist. Bei dieser bekannten Vorrichtung dient das teleskopierbare Absaugrohr in Form eines Überlaufs der Molkeabfuhr und damit auch der Füllstandseinstellung des Käsebruch/Molke-Gemisches im Käsefertiger. Da sich die Vorrichtung in einer Einbuchtung der Kesselwand befindet und somit in den Arbeitsbereich der Schneid- und Rührflügel nicht eingreift, müssen letztere während des Molkeabsaugens zwar nicht stillgesetzt werden, jedoch ist die bekannte Vorrichtung verstopfungsanfällig, da sich die Sieböffnungen des stationär angeordneten Siebkörpers mit Käsebruchbestandteilen leicht zusetzen können.

Darüber hinaus ist der gesamte Absaugvorgang zeitlich determiniert durch die kritische Phase des Absaugvorganges, die dann beginnt, wenn die Absaugeinrichtung in die Nähe des abgesetzten Bruches gelangt, so dass die Bruchkörner von dem Sog der abzuführenden Molke erfasst werden können. Eine Standardisierung des Absaugvorganges in Sinne eines immer zeitgleichen Ablaufs und reproduzierbarer sonstiger Bedingungen wird durch die vorg. Einflüsse mindestens erschwert oder unmöglich gemacht.

Aus der US 6,482,460 B1 ist eine Vorrichtung zur Herstellung von Cottage Käse bekannt, bei der der das Bruch-Molke-Gemisch aufnehmende Tank im oberen Teil einen Auslass für Molke aufweist und der Volumenstrom der aus dem Tank abgeführten und über einen Wärmeaustauscher in den Tank rezirkulierten Molke sowie der Füllstand der Molke im Tank durch ein Ventil gesteuert werden.

Die vorstehend referierten mechanischen Mittel und Maßnahmen zur Beeinflussung und Steuerung der Abfuhr von Molke aus einem Bruch-Molke-Gemisch über dem sich absetzenden Bruch wirken entweder der Verstopfungsgefahr der Sieböffnungen entgegen oder sie dienen dazu, diese Verstopfungen wenigstens teilweise zu beseitigen. Darüber hinaus wirken sich diese Mittel und Maßnahmen verfahrenstechnisch und strömungsmechanisch tendenziell derart aus, dass die Absaugung der Molke zu Beginn des Absaugvorganges bei hohem Füllstand mit einem maximalen Volumenstrom beginnt und im Verlauf des Absaugvorganges bei absinkendem Füllstand mit gegenüber dem anfänglichen Volumenstrom vermindertem Volumenstrom gesteuert ist.

Es ist Aufgabe der vorliegenden Erfindung, eine Anordnung sowie ein Verfahren der einleitend beschriebenen Art zu schaffen, mit denen die Standzeit der verstopfungsanfälligen Absaugeinrichtung für Molke erhöht und der Absaugvorgang der Molke standardisiert wird und eine Abfuhr der Molke ohne nennenswerte Bruchverluste möglich ist.

### ZUSAMMENFASSUNG DER ERFINDUNG

Diese Aufgabe wird durch eine Anordnung mit den Merkmalen des nebengeordneten Anspruchs 1, 2 oder 3 gelöst. Eine vorteilhafte Ausgestaltung der Absaugeinrichtung für Molke ist Gegenstand eines Unteranspruchs. Ein mit der jeweiligen Anordnung durchführbares Verfahren ist durch die Merkmale des Anspruchs 5 gekennzeichnet. Vorteilhafte Ausgestaltungen des Verfahrens sind Gegenstand der Unteransprüche.

Der grundlegende erfinderische Gedanke der jeweiligen Anordnung und des mit dieser durchführbaren Verfahrens besteht darin, dass, im Gegensatz zu Lösungen nach dem Stand der Technik, die Molke nunmehr in Abhängigkeit von ihrem über dem abgesetzten Bruch befindlichen Füllstand abgesaugt wird. Die Absaugung beginnt dabei bei hohem Füllstand mit einem relativ großen, nach Möglichkeit größtmöglichen maximalen Volumenstrom, der apparativ und technologisch angemessen ist. Im Verlauf des Absaugvorganges, wenn der Füllstand absinkt, wird der Absaugvorgang mit gegenüber dem anfänglichen Volumenstrom vermindertem Volumenstrom fortgesetzt.

Bei den vorgeschlagenen Anordnungen zur Abfuhr von Molke aus einem Bruch-Molke-Gemisch über dem sich absetzenden Bruch ist jeweils die Molke bezüglich des Molke-Niveaus bei einem Füllstand in einem Behälter zur Aufnahme des Bruch-Molke-Gemischs von oben her derart abgesaugt, dass die Absaugung zu Beginn es Absaugvorganges bei hohem Füllstand mit einem maximalen Volumenstrom beginnt und im Verlauf des Absaugvorganges bei absinkendem Füllstand mit gegenüber dem anfänglichen Volumenstrom vermindertem Volumenstrom gesteuert ist. Die Anordnungen besitzen weiterhin jeweils eine auf dem veränderlichen Molke-Niveau mitgeführte Absaugeinrichtung für Molke und eine Fördereinrichtung, die einerseits über eine Saugleitung mit der Absaueinrichtung für Molke und andererseits über eine Druckleitung mit einem dem Behälter, in Strömungsrichtung gesehen, nachgeordneten System verbunden ist.

Eine erste Ausführungsform der erfindungsgemäßen Anordnung sieht vor, dass in der Druckleitung eine Durchfluss-Messeinrichtung angeordnet ist, die über eine zweite Steuerleitung mit einer ersten Regeleinrichtung verbunden ist, und dass ein Frequenzumformer vorgesehen ist, der über eine erste Steuerleitung mit der ersten Regeleinrichtung und über eine Leistungsverbindung mit einem elektrischen Antriebsmotor der Fördereinrichtung in Verbindung steht.

Durch den Einsatz eines Frequenzumformers bzw. -umrichters lässt sich der elektrische Antriebsmotor, ein Drehfeldmotor, in der Regel ein Drehstrom-Asynchronmotor, in seiner Drehzahl steuern. Durch diese Drehzahlregelung steht für die Fördereinrichtung (Pumpe) ein Kennlinienfeld zur Verfügung und nicht nur eine von der jeweiligen festen Betriebsdrehzahl abhängige einzige Pumpenkennlinie, wie dies bislang bei Anordnungen nach dem Stand der Technik der Fall ist. Die einzige Pumpenkennlinie ergibt im Zusammenspiel mit der Rohrleitungskennlinie, die sich durch Füllstandsänderung im Behälter und in einem Zieltank des nachgeordneten Systems fortlaufend ändert, lediglich bestimmte Betriebspunkte auf der Pumpenkennlinie. Die erwähnten Rohrleitungskennlinien ergeben hingegen im Zusammenwirken mit dem durch Drehzahländerung entstehenden Kennlinienfeld der Pumpe eine wesentlich größere Variationsbreite des Absaugvorganges, so dass eine Standardisierung des Absaugvorganges in Sinne eines immer zeitgleichen Ablaufs und reproduzierbarer sonstiger Bedingungen möglich wird. Die Durchfluss-Messeinrichtung erlaubt die Ermittlung eines vom Beginn des Absaugvorganges abgesaugten Volumens der Molke, das zur Steuerung des füllstandsabhängigen Volumenstromes herangezogen wird.

Eine zweite Ausführungsform der erfindungsgemäßen Anordnung sieht vor, dass in der Druckleitung ein Regelventil angeordnet ist, das über eine dritte Steuerleitung mit einer zweiten Regeleinrichtung verbunden ist. Die zweite Regeleinrichtung erhält ihre Informationen über den aktuellen Füllstand zur Steuerung des Volumenstromes gemäß einer ersten Variante entweder über eine am Behälter angeordnete Inhalts-Messeinrichtung oder gemäß einer zweiten Variante über eine an der Absaugeinrichtung für Molke unmittelbar oder mittelbar angeordnete Niveau-Messeinrichtung.

Bei allen vorstehend umrissenen Anordnungen lässt sich die Molke in vorteilhafter Weise von oben her absaugen, wenn die Absaugeinrichtung für Molke als rohrförmiges Molkensieb ausgeführt ist, das sich im Wesentlichen in waagerechter Richtung über das Molke-Niveau erstreckt.

Mit einer der vorhergehenden Anordnungen, bei der jeweils die Molke bezüglich des Molke-Niveaus bei einem Füllstand von oben her abgesaugt ist, ist ein Verfahren zur Abfuhr von Molke aus einem Bruch-Molke-Gemisch über dem sich absetzenden Bruch durchführbar, bei dem die Molke in Abhängigkeit von ihrem über dem abgesetzten Bruch befindlichen Füllstand abgesaugt ist.

Eine vorteilhafte Ausgestaltung des Verfahrens gemäß der Erfindung sieht vor, dass der abzusaugende Volumenstrom stetig zwischen dem maximalen Volumenstrom zu Beginn und einem minimalen Volumenstrom am Ende des Absaugvorganges, wenn sich das Molke-Niveau dem abgesetzten Bruch bzw. einer vorgegebenen Mindestüberdeckung der Molke oberhalb des Bruches nähert, gesteuert ist. Durch diesen stetig gesteuerten füllstandsabhängigen Volumenstrom der Absaugung lassen sich optimale Absaugbedingungen für jedes Molke-Niveau erreichen.

Nach einer anderen Ausgestaltung des Verfahrens gemäß der Erfindung ist der abzusaugende Volumenstrom in Stufen zwischen dem maximalen Volumenstrom zu Beginn und einem minimalen Volumenstrom am Ende des Absaugvorganges gesteuert. Dabei ist eine gestufte Anpassung der Absaugleistung regelungstechnisch leichter zu realisieren als eine stetige Anpassung. Um auch am Ende des Absaugvorganges ein Mitreißen von Bruchpartikeln sicher zu verhindern, kann in diesem Bereich eine feinstufige Unterteilung vorgesehen werden.

Der regelungstechnische Aufwand lässt sich weiter dadurch reduzieren, dass die Absaugung in zwei Stufen erfolgt, wie dies ein weiterer Vorschlag im Rahmen der stufigen Anpassung vorsieht, wobei bei einem vorbestimmten Füllstand unterhalb des zu Beginn des Absaugvorganges vorliegenden Füllstands auf den reduzierten bzw. minimalen Volumenstrom umgeschaltet ist.

Ist ein vom Beginn des Absaugvorganges abgesaugtes Volumen der Molke fortlaufend erfasst, wie dies weiterhin vorgeschlagen wird, dann lässt sich mit diesem Volumen die aktuelle Lage des Molke-Niveaus bzw. des Füllstands unter den ge-Itenden Randbedingungen für den Behälter ermitteln und somit der jeweils abzusaugende Volumenstrom in Abhängigkeit von diesem Füllstand steuern.

### KURZBESCHREIBUNG DER ZEICHNUNGEN

Zwei Ausführungsbeispiele der Anordnung sowie mit diesen Anordnungen durchführbare Ausgestaltungsmöglichkeiten des Verfahrens gemäß der Erfindung sind in den Figuren der Zeichnung dargestellt und werden nachfolgend beschrieben.
Es zeigen
- **Figur 1**: in grafischer Darstellung mögliche Verläufe des füllstandsabhängigen Volumenstroms der abzuführenden Molke gemäß der Erfindung;
- **Figur 2a**: in schematischer Darstellung eine erste Ausführungsform der Anordnung gemäß der Erfindung mit einem frequenzgesteuerten elektrischen Antriebsmotor der Fördereinrichtung zur Absaugung der Molke, einer ersten Regeleinrichtung und einer Durchfluss-Messeinrichtung, wobei die Darstellung den Beginn des Absaugvorganges festhält;
- **Figur 2b**: in schematischer Darstellung die erste Ausführungsform gemäß **Figur 2a**, wobei die Darstellung das Ende des Absaugvorganges festhält und
- **Figur 3**: in schematischer Darstellung eine zweite Ausführungsform der Anordnung gemäß der Erfindung mit einer zweiten Regel-Einrichtung und einer Inhalts-Messeinrichtung am Behälter oder einer Niveau-Messeinrichtung an der Absaugeinrichtung für Molke.

### BESCHREIBUNG

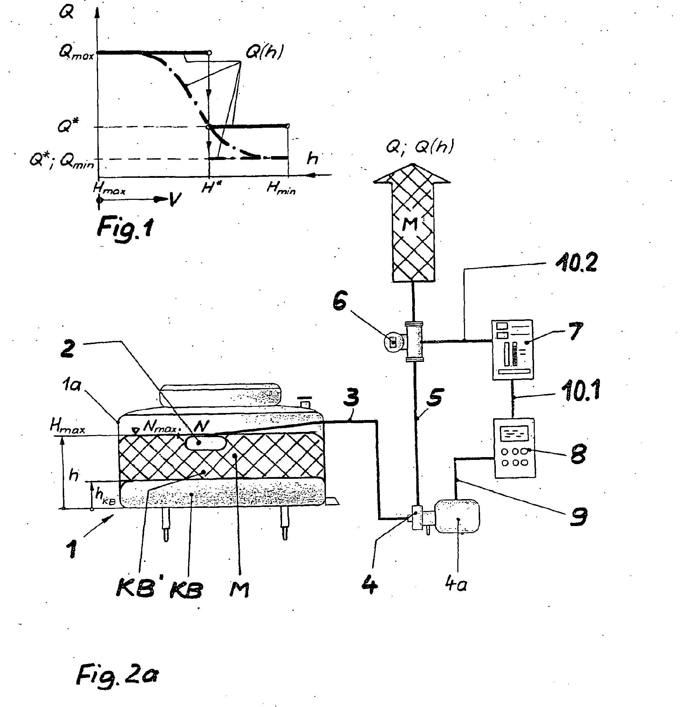

Ein Käsefertiger 1 (**Figur 2a**) in einer der vorbeschriebenen Ausführungen beinhaltet in einem Behälter 1 a ein Käsebruch-Molke-Gemisch KB/M, wobei sich die Körner des Käsebruchs KB innerhalb der Molke M im Bodenbereich des Behälters 1 a abgesetzt haben. Es sei angenommen, dass die Molke M über dem Käsebruch KB ein Molke-Niveau N (freier Flüssigkeitsspiegel) ausbildet, im vorliegenden Falle das maximale Molke-Niveau Nₘₐₓ mit einem Füllstand h über dem Behälterboden, der im Ausführungsbeispiel als maximaler Füllstand Hₘₐₓ bezeichnet ist (h = Hₘₐₓ). Ein Füllstand des Käsebruch-Niveaus sei mit h_{KB} bezeichnet.

Eine Absaugeinrichtung für Molke 2 wird auf dem veränderlichen Molke-Niveau N mitgeführt. Diese Mitführung kann beispielsweise leitwertgesteuert erfolgen. Eine Saugleitung 3, die innerhalb des Behälters 1 a beweglich ausgeführt ist, verbindet die Absaugeinrichtung für Molke 2 mit der Saugseite einer Fördereinrichtung 4, in der Regel einer Kreiselpumpe. Druckseitig ist die Fördereinrichtung 4 über eine Druckleitung 5 beispielsweise mit einem nicht dargestellten Zieltank eines nachgeordneten Systems einer molkereitechnischen Prozessanlage verbunden. In der Druckleitung 5 ist eine Durchfluss-Messeinrichtung 6 angeordnet, die über eine zweite Steuerleitung 10.2 mit einer ersten Regeleinrichtung 7 in Verbindung steht. Ein elektrischer Antriebsmotor 4a der Fördereinrichtung 4 ist über eine Leistungsverbindung 9 mit einem Frequenzumformer 8 verbunden, so dass die Drehzahl des in der Regel als Drehstrom-Asynchronmotor ausgebildeten elektrischen Antriebsmotors 4a veränderbar ist. Der Frequenzumformer 8 und die erste Regeleinrichtung 7 kommunizieren über eine erste Steuerleitung 10.1.

Der Absaugvorgang der Molke M beginnt bei dem in **Figur 2a** dargestellten maximalen Molke-Niveau Nₘₐₓ und damit ausgehend von dem maximalen Füllstand Hₘₐₓ. Bei einer stetigen Steuerung eines Volumenstromes Q bzw. eines füllstandsabhängigen Volumenstromes (Q(h)) der abzusaugenden Molke M beginnt der Absaugvorgang gemäß **Figur 1** (strichpunktierter stetiger Kurvenverlauf (Q(h)) mit einem maximalen Volumenstrom Qₘₐₓ (Q(h) = Q(Hₘₐₓ) = Qₘₐₓ). Im Verlauf des Absaugvorganges wird bei absinkendem Füllstand h der Volumenstrom Q(h) stetig reduziert, bis letzterer bei einem minimalen Füllstand Hₘᵢₙ oberhalb des Füllstandes h_{KB} des Käsebruchs KB einen minimalen Volumenstrom Qₘᵢₙ erreicht (Q(h) = Q(Hₘᵢₙ) = Qₘᵢₙ).

Zu Beginn des Absaugvorganges befindet sich zwischen der Absaugeinrichtung für Molke 2 und dem abgesetzten Käsebruch KB ein Bereich unbeeinflussten Käsebruchs KB' (**Figur 2a**). Die Strömung zur Absaugeinrichtung für Molke 2 hat hier keine auf die Bruchkörner mitführende Wirkung. Aus diesem Grunde kann in dieser Phase des Absaugvorganges der Molke M der Volumenstrom Q(h) bis zu einem technisch und technologisch vertretbaren Maß gesteigert werden.

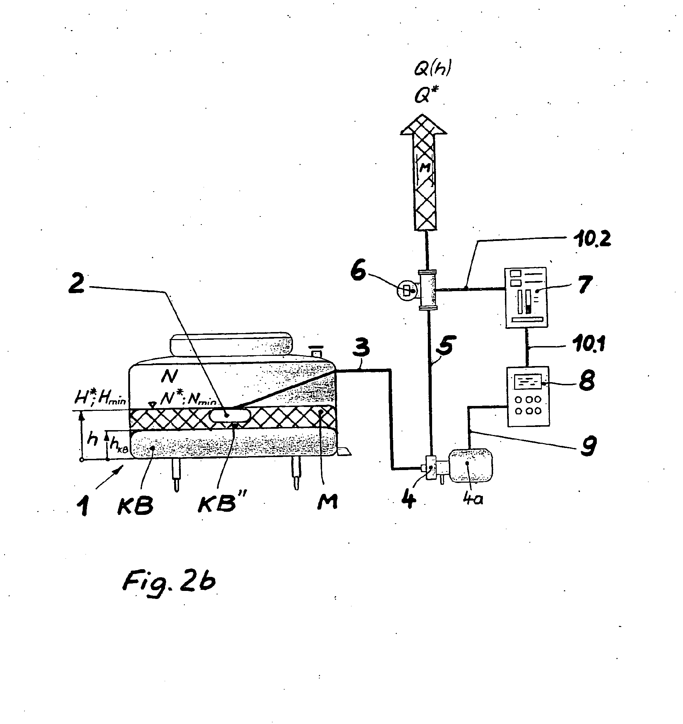

Am Ende des Absaugvorganges der Molke M, wenn sich das Molke-Niveau N einem minimalen Molke-Niveau Nₘᵢₙ oberhalb des abgesetzten Käsebruchs KB nähert (**Figur 2b**), besteht dort im Einflussbereich der Absaugeinrichtung für Molke 2 die Gefahr, dass die Bruchkörner aufschwimmen und mitgerissen werden. Um unter diesen Bedingungen einen Bereich aufschwimmenden Käsebruchs KB" zu vermeiden, wird gemäß **Figur 1** rechtzeitig die vorstehend beschriebene Reduzierung des Volumenstroms Q(h) auf den minimalen Volumenstrom Qₘᵢₙ vorgenommen (Q(h) = Q(Hmin) = Qmin).

Das zwischen den Füllständen h = Hₘₐₓ und h= Hₘᵢₙ abzuführende Volumen V der Molke M, der Summenwert, gerechnet vom Beginn des Absaugvorganges an, wird über die Durchfluss-Messeinrichtung 6 erfasst. Da die Rezeptur des Käsebruchs KB (Anteil der Bruchkörner KB und damit Füllstand des Käsebruch-Niveaus h_{KB} und Anteil der Molke M und damit maximaler Füllstand des Molke-Niveaus Hₘₐₓ) und die Kenngrößen des Käsefertigers 1 bekannt sind, lässt sich zu jedem Zeitpunkt des Absaugvorganges der Molke M ermitteln, wo sich der Füllstand h der Molke M befindet. Das jeweils abgesaugte Volumen V der Molke kann damit zur Steuerung des füllstandsabhängigen Volumenstroms Q(h) herangezogen werden (**Figur 1**).

Eine weitere Ausgestaltung des erfindungsgemäßen Verfahrens sieht vor, dass der abzusaugende Volumenstrom Q(h) in Stufen zwischen dem maximalen Volumenstrom Qₘₐₓ zu Beginn und dem minimalen Volumenstrom Qₘᵢₙ am Ende des Absaugvorganges gesteuert ist. Die Anzahl der Stufen ist frei wählbar, wobei sich gezeigt hat, dass eine befriedigende Lösung des Absaugproblems, wie dies ein Vorschlag vorsieht, bereits mit zwei Stufen erreicht wird (**Figur 1**).

Wie aus **Figur 1** ersichtlich ist, wird beispielsweise bei einem Füllstand h = H*, dem Füllstand am sog. Umschaltpunkt, der zwischen dem maximalen und dem minimalen Füllstand Hₘₐₓ bzw. Hₘᵢₙ liegt und dort ein Molke-Niveau am Umschaltpunkt N* ausbildet (**Figur 2b**) und bei dem der Bereich aufschwimmenden Käsebruchs KB" noch nicht erreicht ist, ein Volumenstrom am Umschaltpunkt Q* eingestellt. Mit diesem kann dann der minimale Füllstand Hₘᵢₙ angefahren werden, ohne dass dabei die Gefahr der Verstopfung der Siebe der Absaugeinrichtung für Molke 2 durch Mitreißen der Bruchkörner besteht. Der Volumenstrom am Umschaltpunkt Q* kann im Grenzfall dem minimalen Volumenstrom Qₘᵢₙ entsprechen, wie dies **Figur 1** gleichfalls zeigt, wenn die technologischen Bedingungen der Bruchausbildung (z.B. feinkörniger Bruch) dies erforderlich machen.

Die Möglichkeit der Drehzahländerung beim elektrischen Antriebsmotor 4a und damit der Fördereinrichtung 4 mittels des Frequenzumformers 8 bildet die Grundlage dafür, dass die sich während des Absaugvorganges der Molke M ändernde Rohrleitungskennlinie des Käsefertigers 1 und des mit ihm beispielsweise verbundenen Zieltanks, weil sich im Käsefertiger 1 und im Zieltank die Füllstände zwangsläufig ständig verändern, nunmehr mit einem Kennlinienfeld der Fördereinrichtung 4 und nicht, wie bei Lösungen nach dem Stand der Technik, mit einer von einer bestimmten Betriebsdrehzahl abhängigen einzigen Kennlinie zusammenarbeitet. Durch die dadurch gegebenen Anpassungsvielfalt ist eine Standardisierung des Absaugvorganges der Molke M möglich.

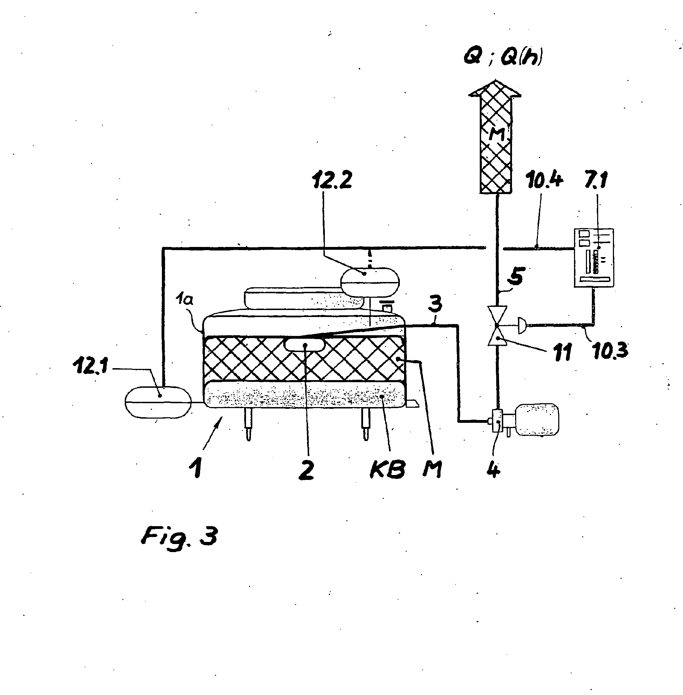

Gemäß einer zweiten Ausführungsform der erfindungsgemäßen Anordnung (**Figur 3**) ist im Unterschied zur ersten Ausführungsform gemäß den **Figuren 2a** und **2b** in der Druckleitung 5 ein Regelventil 11 angeordnet, das über eine dritte Steuerleitung 10.3 mit einer zweiten Regeleinrichtung 7.1 verbunden ist. Über dieses Regelventil 11 wird während des Absaugvorganges der Molke M die erforderliche füllstandsabhängige Änderung des Volumenstromes Q(h) gemäß **Figur 1** vorgenommen. Die hierzu notwendigen Informationen über den jeweils aktuellen Füllstand h liefert entweder eine am Behälter 1 a angeordnete Inhalts-Messeinrichtung 12.1 oder eine an der Absaugeinrichtung für Molke 2 unmittelbar oder mittelbar angeordnete Niveau-Messeinrichtung 12.2, wobei jede dieser Messeinrichtungen 12.1, 12.2 mit der zweiten Regeleinrichtung 7.1 über eine vierte Steuerleitung 10.4 in Verbindung steht.

### BEZUGSZEICHENLISTE

- 1: Käsefertiger
- 1 a: Behälter

- 2: Absaugeinrichtung für Molke (auf Molke-Niveau mitgeführt); Molkensieb

- 3: Saugleitung

- 4: Fördereinrichtung (Pumpe)
- 4a: elektrischer Antriebsmotor

- 5: Druckleitung

- 6: Durchfluss-Messeinrichtung

- 7: erste Regeleinrichtung
- 7.1: zweite Regeleinrichtung

- 8: Frequenzumformer

- 9: Leitungsverbindung

- 10.1: erste Steuerleitung
- 10.2: zweite Steuerleitung
- 10.3: dritte Steuerleitung
- 10.4: vierte Steuerleitung

- 11: Regelventil

- 12.1: Inhalts-Messeinrichtung
- 12.2: Niveau-Messeinrichtung

- h: Füllstand des Molke-Niveaus, allgemein
- h_{KB}: Füllstand des Käsebruch-Niveaus, allgemein

- Hₘₐₓ: maximaler Füllstand
- H*: Füllstand am Umschaltpunkt
- Hₘᵢₙ: minimaler Füllstand

- KB: Käsebruch
- KB': Bereich unbeeinflussten Käsebruchs
- KB": Bereich aufschwimmenden Käsebruchs

- M: Molke

- N: Molke-Niveau, allgemein
- Nₘₐₓ: maximales Molke-Niveau
- N*: Molke-Niveau am Umschaltpunkt
- Nₘᵢₙ: minimales Molke-Niveau

- Q(h): füllstandsabhängiger Volumenstrom, allgemein
- Q: Volumenstrom, allgemein
- Qₘₐₓ: maximaler Volumenstrom
- Q*: Volumenstrom am Umschaltpunkt
- Qₘᵢₙ: minimaler Volumenstrom

- V: abgesaugtes Volumen der Molke (Summenwert, gerechnet vom Beginn des Absaugvorganges)

## Patentansprüche

1. Anordnung zur Abfuhr von Molke (M) aus einem Bruch-Molke-Gemisch (KB/M) über dem sich absetzenden Bruch (KB), bei der die Molke (M) bezüglich des Molke-Niveaus (N) bei einem Füllstand (h) in einem Behälter (1a) zur Aufnahme des Bruch-Molke-Gemischs (KB/M) von oben her derart abgesaugt ist, dass die Absaugung zu Beginn es Absaugvorganges bei hohem Füllstand mit einem maximalen Volumenstrom (Qₘₐₓ) beginnt und im Verlauf des Absaugvorganges bei absinkendem Füllstand mit gegenüber dem anfänglichen Volumenstrom vermindertem Volumenstrom Q(h) gesteuert ist, mit einer auf dem veränderlichen Molke-Niveau (N) mitgeführten Absaugeinrichtung für Molke (2), einer Fördereinrichtung (4), die einerseits über eine Saugleitung (3) mit der Absaueinrichtung für Molke (2) und andererseits über eine Druckleitung (5) mit einem dem Behälter (1a), in Strömungsrichtung gesehen, nachgeordneten System verbunden ist, wobei in der Druckleitung (5) eine Durchfluss-Messeinrichtung (6) angeordnet ist, die über eine zweite Steuerleitung (10.2) mit einer ersten Regeleinrichtung (7) verbunden ist, und dass ein Frequenzumformer (8) vorgesehen ist, der über eine erste Steuerleitung (10.1) mit der ersten Regeleinrichtung (7) und über eine Leitungsverbindung (9) mit einem elektrischen Antriebsmotor (4a) der Fördereinrichtung (4) in Verbindung steht.

2. Anordnung zur Abfuhr von Molke (M) aus einem Bruch-Molke-Gemisch (KB/M) über dem sich absetzenden Bruch (KB), bei der die Molke (M) bezüglich des Molke-Niveaus (N) bei einem Füllstand (h) in einem Behälter (1a) zur Aufnahme des Bruch-Molke-Gemischs (KB/M) von oben her derart abgesaugt ist, dass die Absaugung zu Beginn es Absaugvorganges bei hohem Füllstand mit einem maximalen Volumenstrom (Qₘₐₓ) beginnt und im Verlauf des Absaugvorganges bei absinkendem Füllstand mit gegenüber dem anfänglichen Volumenstrom vermindertem Volumenstrom Q(h) gesteuert ist, mit einer auf dem veränderlichen Molke-Niveau (N) mitgeführten Absaugeinrichtung für Molke (2), einer Fördereinrichtung (4), die einerseits über eine Saugleitung (3) mit der Absaueinrichtung für Molke (2) und andererseits über eine Druckleitung (5) mit einem dem Behälter (1a), in Strömungsrichtung gesehen, nachgeordneten System verbunden ist, wobei in der Druckleitung (5) ein Regelventil (11) angeordnet ist, das über eine dritte Steuerleitung (10.3) mit einer zweiten Regeleinrichtung (7.1) verbunden ist, und dass die zweite Regeleinrichtung (7.1) mit einer am Behälter (1a) angeordneten Inhalts-Messeinrichtung (12.1) über eine vierte Steuerleitung (10.4) in Verbindung steht.

3. Anordnung zur Abfuhr von Molke (M) aus einem Bruch-Molke-Gemisch (KB/M) über dem sich absetzenden Bruch (KB), bei der die Molke (M) bezüglich des Molke-Niveaus (N) bei einem Füllstand (h) in einem Behälter (1a) zur Aufnahme des Bruch-Molke-Gemischs (KB/M) von oben her derart abgesaugt ist, dass die Absaugung zu Beginn es Absaugvorganges bei hohem Füllstand mit einem maximalen Volumenstrom (Qₘₐₓ) beginnt und im Verlauf des Absaugvorganges bei absinkendem Füllstand mit gegenüber dem anfänglichen Volumenstrom vermindertem Volumenstrom Q(h) gesteuert ist, mit einer auf dem veränderlichen Molke-Niveau (N) mitgeführten Absaugeinrichtung für Molke (2), einer Fördereinrichtung (4), die einerseits über eine Saugleitung (3) mit der Absaueinrichtung für Molke (2) und andererseits über eine Druckleitung (5) mit einem dem Behälter (1a), in Strömungsrichtung gesehen, nachgeordneten System verbunden ist, wobei in Druckleitung (5) ein Regelventil (11) angeordnet ist, das über eine dritte Steuerleitung (10.3) mit einer zweiten Regeleinrichtung (7.1) verbunden ist, und dass die zweite Regeleinrichtung (7.1) mit einer an der Absaugeinrichtung für Molke (2) unmittelbar oder mittelbar angeordneten Niveau-Messeinrichtung (12.2) über eine vierte Steuerleitung (10.4) in Verbindung steht.

4. Anordnung nach einem der Ansprüche 1 bis 3,
**dadurch gekennzeichnet,**
**dass** die Absaugeinrichtung für Molke (2) als rohrförmiges Molkensieb ausgeführt ist, das sich im Wesentlichen in waagerechter Richtung über das Molke-Niveau (N) erstreckt.

5. Verfahren zur Abfuhr von Molke (M) aus einem Bruch-Molke-Gemisch (KB/M) über dem sich absetzenden Bruch (KB), bei dem die Molke (M) bezüglich des Molke-Niveaus (N) bei einem Füllstand (h) mit einer Anordnung nach einem der vorhergehenden Ansprüche von oben her abgesaugt ist,
wobei die Molke (M) in Abhängigkeit von ihrem über dem abgesetzten Bruch (KB) befindlichen Füllstand (h) abgesaugt ist.

6. Verfahren nach Anspruch 5,
**dadurch gekennzeichnet,**
**dass** der abzusaugende Volumenstrom (Q(h)) stetig zwischen dem maximalen Volumenstrom (Qₘₐₓ) zu Beginn und einem minimalen Volumenstrom (Qₘᵢₙ) am Ende des Absaugvorganges gesteuert ist.

7. Verfahren nach Anspruch 5,
**dadurch gekennzeichnet,**
**dass** der abzusaugende Volumenstrom (Q(h)) in Stufen zwischen dem maximalen Volumenstrom (Qₘₐₓ) zu Beginn und einem minimalen Volumenstrom (Qₘᵢₙ; Q*) am Ende des Absaugvorganges gesteuert ist.

8. Verfahren nach Anspruch 7,
**dadurch gekennzeichnet,**
**dass** die Absaugung in zwei Stufen erfolgt, wobei bei einem vorbestimmten Füllstand (h = H*) unterhalb des zu Beginn des Absaugvorganges vorliegenden Füllstands auf den minimalen Volumenstrom (Q*) umgeschaltet ist.

9. Verfahren nach einem der Ansprüche 5 bis 8,
**dadurch gekennzeichnet,**
**dass** ein vom Beginn des Absaugvorganges abgesaugtes Volumen (V) der Molke (M) fortlaufend erfasst und zur Steuerung des füllstandsabhängigen Volumenstroms (Q(h)) herangezogen ist.

## Claims

1. Device for extracting whey (M) from a curd-whey mixture (KB/M) through the separated curd (KB), in which the whey (M) is sucked up from above at a level (h) relative to the whey level (N) in a container (1a) for receiving the curd-whey mixture (KB/M), such that at the start of the suction process the suction begins when the level is high at a maximum volume flow (Qₘₐₓ) and during the course of the suction process when the level reduces, is controlled at a reduced volume flow Q(h) relative to the initial volume flow, comprising a suction device for whey (2) driven towards the variable whey level (N) and a conveying device (4) which, on the one hand, is connected to the suction device for whey (2) via a suction line (3) and, on the other hand, via a pressure line (5) to a system arranged downstream of the container (1a) viewed in the direction of flow, in the pressure line (5) a through-flow measuring device (6) being arranged, which is connected via a second control line (10.2) to a first control device (7), and in that a frequency converter (8) is provided which is connected to the first control device (7) via a first control line (10.1) and via a line connection (9) to an electric drive motor (4a) of the conveying device (4).

2. Device for extracting whey (M) from a curd-whey mixture (KB/M) through the separated curd (KB), in which the whey (M) is sucked up from above at a level (h) relative to the whey level (N) in a container (1a) for receiving the curd-whey mixture (KB/M), such that at the start of the suction process the suction begins when the level is high at a maximum volume flow (Qₘₐₓ) and during the course of the suction process when the level reduces, is controlled at a reduced volume flow Q(h) relative to the initial volume flow, comprising a suction device for whey (2) driven towards the variable whey level (N) and a conveying device (4) which, on the one hand, is connected to the suction device for whey (2) via a suction line (3) and, on the other hand, via a pressure line (5) to a system arranged downstream of the container (1a) viewed in the direction of flow, in the pressure line (5) a control valve (11) being arranged, which is connected to a second control device (7.1) via a third control line (10.3) and in that the second control device (7.1) is connected to a contents measuring device (12.1) arranged on the container (1a) via a fourth control line (10.4).

3. Device for extracting whey (M) from a curd-whey mixture (KB/M) through the separated curd (KB), in which the whey (M) is sucked up from above at a level (h) relative to the whey level (N) in a container (1a) for receiving the curd-whey mixture (KB/M), such that at the start of the suction process the suction begins when the level is high at a maximum volume flow (Qₘₐₓ) and during the course of the suction process when the level reduces, is controlled at a reduced volume flow Q(h) relative to the initial volume flow, comprising a suction device for whey (2) driven towards the variable whey level (N) and a conveying device (4) which, on the one hand, is connected to the suction device for whey (2) via a suction line (3) and, on the other hand, via a pressure line (5) to a system arranged downstream of the container (1a) viewed in the direction of flow, in the pressure line (5) a control valve (11) being arranged, which is connected to a second control device (7.1) via a third control line (10.3) and in that the second control device (7.1) is connected to a level measuring device (12.2) arranged directly or indirectly on the suction device for whey (2) via a fourth control line (10.4).

4. Device according to one of Claims 1 to 3, **characterised in that** the suction device for whey (2) is designed as a tubular whey strainer, which extends substantially in the horizontal direction above the whey level (N).

5. Method for extracting whey (M) from a curd-whey mixture (KB/M) through the separated curd (KB), in which the whey (M) is sucked up from above at a level (h) relative to the whey level (N) by a device according to one of the preceding claims, the whey (M) being sucked up depending on its level (h) above the separated curd (KB).

6. Method according to Claim 5, **characterised in that** the volume flow (Q(h)) to be sucked up is constantly controlled between the maximum volume flow (Qₘₐₓ) at the start and a minimum volume flow (Qₘᵢₙ) at the end of the suction process.

7. Method according to Claim 5, **characterised in that** the volume flow (Q(h)) to be sucked up is controlled in steps between the maximum volume flow (Qₘₐₓ) at the start and a minimum volume flow (Qₘᵢₙ;Q*) at the end of the suction process.

8. Method according to Claim 7, **characterised in that** the suction takes place in two steps, a switching to the minimum volume flow (Q*) taking place at a predetermined level (h=H*) below the level present at the start of the suction process.

9. Method according to one of Claims 5 to 8, **characterised in that** a volume (V) of the whey (M) sucked up from the start of the suction process is continuously detected and is used for controlling the level-dependent volume flow (Q(h)).

## Revendications

1. Système d'évacuation de petit-lait (M) d'un mélange de lait caillé/petit-lait (KB/M) au-dessus du lait caillé (KB) se déposant, dans lequel le petit-lait (M) est aspiré par le haut par rapport au niveau de petit-lait (N) à une hauteur de remplissage (h) dans un conteneur (1a) pour la réception du mélange de lait caillé/petit-lait (KB/M) de telle sorte que l'aspiration commence au début du processus d'aspiration à une hauteur de remplissage élevée avec un débit volumétrique maximum (Qₘₐₓ) et est commandée au cours du processus d'aspiration avec un débit volumétrique réduit Q(h) par rapport au débit volumétrique initial lorsque la hauteur de remplissage baisse, avec un dispositif d'aspiration pour petit-lait (2) emmené avec le niveau variable de petit-lait (N), un dispositif de transport (4) qui est raccordé d'un côté par une conduite d'aspiration (3) au dispositif d'aspiration pour petit-lait (2) et d'un autre côté par une conduite de refoulement (5) à un système en aval du conteneur (1a) vu dans le sens de l'écoulement, un dispositif de mesure du débit (6) étant disposé dans la conduite de refoulement (5), qui est raccordé à un premier dispositif de réglage (7) par une seconde ligne de commande (10.2) et qu'un convertisseur de fréquence (8) est prévu, qui est en contact avec le premier dispositif de réglage (7) par une première ligne de commande (10.1) et avec un moteur de commande électrique (4a) du dispositif de transport (4) par une liaison câblée (9).

2. Système d'évacuation de petit-lait (M) d'un mélange de lait caillé/petit-lait (KB/M) au-dessus du lait caillé (KB) se déposant, dans lequel le petit-lait (M) est aspiré par le haut par rapport au niveau de petit-lait (N) à une hauteur de remplissage (h) dans un conteneur (1a) pour la réception du mélange de lait caillé/petit-lait (KB/M) de sorte que l'aspiration commence au début du processus d'aspiration à une hauteur de remplissage élevée avec un débit volumétrique maximum (Qₘₐₓ) et est commandée au cours du processus d'aspiration avec un débit volumétrique réduit Q(h) par rapport au débit volumétrique initial lorsque la hauteur de remplissage baisse, avec un dispositif d'aspiration pour petit-lait (2) emmené avec le niveau variable de petit-lait (N), un dispositif de transport (4) qui est raccordé d'un côté au dispositif d'aspiration pour petit-lait (2) par une conduite d'aspiration (3) et d'un autre côté à un système en aval du conteneur (1a) vu dans le sens d'écoulement par une conduite de refoulement (5), une soupape de réglage (11) étant disposée dans la conduite de refoulement (5), qui est raccordée à un second dispositif de réglage (7.1) par une troisième ligne de commande (10.3), et que le second dispositif de réglage (7.1) est en contact avec un dispositif de mesure du contenu (12.1) disposé au niveau du conteneur (1a) par une quatrième ligne de commande (10.4).

3. Système d'évacuation de petit-lait (M) d'un mélange de lait caillé/petit lait (KB/M) au-dessus du lait caillé (KB) se déposant, dans lequel le petit-lait (M) est aspiré par le haut par rapport au niveau de petit-lait (N) à une hauteur de remplissage (h) dans un conteneur (1a) pour la réception du mélange lait caillé/petit lait (KB/M) de telle sorte que l'aspiration au début du processus d'aspiration commence à une hauteur de remplissage élevée avec un débit volumétrique maximum (Qₘₐₓ) et est commandée au cours du processus d'aspiration avec un débit volumétrique réduit Q(h) par rapport au débit volumétrique initial lorsque la hauteur de remplissage baisse, avec un dispositif d'aspiration pour petit-lait (2) emmené avec le niveau variable de petit-lait (N), un dispositif de transport (4), qui est raccordé d'un côté par une conduite d'aspiration (3) au dispositif d'aspiration pour petit-lait (2) et de l'autre côté par une conduite de refoulement (5) à un système en aval du conteneur (1a) vu dans le sens d'écoulement, une soupape de réglage (11) étant disposée dans la conduite de refoulement (5), qui est raccordée par une troisième ligne de commande (10.3) à un second dispositif de réglage (7.1), et que le second dispositif de réglage (7.1) est en contact par une quatrième ligne de commande (10.4) avec un dispositif de mesure du niveau (12.2) disposé directement ou indirectement sur le dispositif d'aspiration pour petit-lait (2).

4. Système selon l'une des revendications 1 à 3,
**caractérisé en ce que**
le dispositif d'aspiration pour petit-lait (2) est réalisé en tant que tamis à petit-lait tubulaire qui s'étend essentiellement dans le sens horizontal sur le niveau de petit-lait (N).

5. Procédé d'évacuation de petit-lait (M) d'un mélange de lait caillé/petit-lait (KB/M) sur lequel est déposé le lait caillé (KB), dans lequel le petit-lait (M) est aspiré par le haut par rapport au niveau de petit-lait (N) à une hauteur de remplissage (h) avec un système selon l'une des revendications précédentes, le petit-lait (M) étant aspiré selon sa hauteur de remplissage (h) se trouvant au-dessus du lait caillé (KB) déposé.

6. Procédé selon la revendication 5,
**caractérisé en ce que**
le débit volumétrique (Q(h)) à aspirer est commandé de manière continue entre le débit volumétrique maximum (Qₘₐₓ) au début et un débit volumétrique minimum (Qₘᵢₙ) à la fin du processus d'aspiration.

7. Procédé selon la revendication 5,
**caractérisé en ce que**
le débit volumétrique (Q(h)) à aspirer est commandé en étapes entre le débit volumétrique maximum (Qₘₐₓ) au début et un débit volumétrique minimum (Qₘᵢₙ; Q*) à la fin du processus d'aspiration.

8. Procédé selon la revendication 7,
**caractérisé en ce que**
l'aspiration a lieu en deux étapes, dans lequel à une hauteur de remplissage prédéterminé (h = H*) en-dessous de la hauteur de remplissage existant au début du processus d'aspiration on passe au débit volumétrique minimum (Q*).

9. Procédé selon l'une des revendications 5 à 8,
**caractérisé en ce qu'**
un volume (V) du petit-lait (M) aspiré depuis le début du processus d'aspiration est enregistré de manière continue et est mis à contribution pour la commande du débit volumétrique (Q(h)) dépendant de la hauteur de remplissage.
